# EUROPÄISCHE PATENTANMELDUNG

(11) **EP 1 870 188 A2**
(43) Veröffentlichungstag der Anmeldung: **26.12.2007**
(21) Anmeldenummer: 07012243.7
(22) Anmeldetag: 22.06.2007
(51) Int. Cl.: B23H 3/02

(54) **Einrichtung zum Abschalten und Betreiben einer Stromzuführung eines elektrochemischen Bearbeitungswerkzeuges**

(30) Priorität: 23.06.2006 DE 102006029328
(71) Anmelder: SITEC Automation GmbH, 09114 Chemnitz (DE)
(72) Erfinder: Scharrnbeck, Matthias, Dipl.-Ing., 09380 Thalheim (DE); Schröter, Klaus, Dipl.-Ing., 09577 Niederwiesa (DE); Hein, Christian, Dipl.-Ing., 09648 Mittweida (DE)
(74) Vertreter: Findeisen Hübner Neumann Seerig

(57) **Zusammenfassung**

Die Erfindung betrifft eine Einrichtung zum Abschalten und Betreiben einer Stromzuführung für ein elektrochemisches Bearbeitungswerkzeug bei einem Kurzschluss. Es wird die Aufgabe gelöst, eine solche Einrichtung zu schaffen, bei der die Abschaltverzögerung verhältnismäßig klein ist. Hierfür wird vorgeschlagen, dass die Gleichspannung (3) in einem pulsweitengeregelten Stromversorger (4) in ein Drehstromnetz (5) gewandelt wird, dass nachfolgend die Stromimpulse des Drehstromnetzes (5) in einer Induktivität (6) zu einer Sinusform integriert werden, wobei ein Transformator (10) die Leistung überträgt und dass in einem zweiten Gleichrichter (11) aus der Wechselspannung (9) eine Bearbeitungsspannung (13) für das Betreiben des elektrochemischen Bearbeitungswerkzeuges (15) erzeugt wird, wobei nach dem zweiten Gleichrichter (11) eine Messeinrichtung (7) angeordnet ist, die einen Kurzschlussstrom überwacht und bei Überschreiten des Kurzschlussstromes ein Fehlersignal (12) erzeugt, das direkt auf eine Ansteuerung (8) der Schaltelemente (14) des Stromversorgers (4) gerichtet ist.

## Beschreibung

Die Erfindung betrifft eine Einrichtung zum Abschalten und Betreiben einer Stromzuführung eines elektrochemischen Bearbeitungswerkzeuges bei einem Kurzschluss, wobei ein Gleichrichter aus einem Versorgungsnetz eine Gleichspannung zur Verfügung stellt.

Für eine elektrochemische Bearbeitung von Werkstücken sind hohe Energien und damit hohe Ströme notwendig. Diese werden u.a. durch Drehstromthyristorsteller in Verbindung mit Drehstromtransformatoren und sekundärseitiger Gleichrichtung oder AC-DC-Stromversorgungen erzeugt. Lösungen mit ein- und zweiphasigen Generatoren für elektrochemische Bearbeitungsvorgänge sind bekannt.

Sofern diese Generatoren mit einer Phasenanschnittsteuerung betrieben werden, wie aus EP 383 543 B1 bekannt, treten bei kleinen Phasenwinkeln Betriebszustände mit einem lückenden Bearbeitungsstrom auf. Bei Betriebszuständen mit Phasenwinkeln, welche keinen lückenden Strom erzeugen, ist die Welligkeit des Ausgangsstromes im 50 Hz- Netz 6,6 ms. Demzufolge liegt die Mindestabschaltzeit für Drehstromthyristorsteller bei > 12 ms beim Betrieb am 50 Hz- Drehstromnetz sowie um die 20 ms beim Zweiphasennetz. Dadurch bedingt, treten trotz schneller Auswertevorrichtungen und einer Ausführung des Generators für elektrochemische Bearbeitungsvorgänge gemäß EP 383 543 B1 für die Kurzschluss- und Lichtbogenerkennung wegen der Notwendigkeit einer Fehlerintegration verhältnismäßig lange Abschaltverzögerungen auf. Genannt werden 20 ms, welche noch zu der Abschaltverzögerungszeit des Drehstromthyristorstellers von 13,2 ms addiert werden müssen. Deshalb ist die Gefahr einer Elektrodenbeschädigung mit einer solchen Auswerteschaltung verhältnismäßig groß.

Aufgabe der Erfindung ist es, eine Einrichtung zum Abschalten und Betreiben einer Stromzuführung eines elektrochemischen Bearbeitungswerkzeuges zu schaffen, bei der die Abschaltverzögerung bei Kurzschluss verhältnismäßig klein ist.

Erfindungsgemäß wird diese Aufgabe gelöst, indem die Gleichspannung in einem pulsweitengeregelten Stromversorger in ein Drehstromnetz gewandelt wird und indem nachfolgend die Stromimpulse des Drehstromnetzes in einer Induktivität zu einer Sinusform integriert werden, wobei ein Transformator die Leistung überträgt und indem in einem zweiten Gleichrichter aus der Wechselspannung eine Bearbeitungsspannung für das Betreiben des elektrochemischen Bearbeitungswerkzeuges erzeugt wird, wobei nach dem zweiten Gleichrichter eine Messeinrichtung angeordnet ist, die einen Kurzschlussstrom überwacht und bei Überschreiten des Kurzschlussstromes ein Fehlersignal erzeugt, das direkt auf eine Ansteuerung der Schaltelemente des Stromversorgers gerichtet ist.

Nachfolgend wird die Erfindung anhand eines Ausführungsbeispiels näher erläutert. Die dazugehörige Zeichnung zeigt ein Blockschaltbild einer Einrichtung zum Abschalten und Betreiben einer Stromzuführung für ein elektrochemisches Bearbeitungswerkzeug bei einem Kurzschluss.

Ein erster Gleichrichter 1 stellt aus einem Versorgungsnetz 2 eine Gleichspannung 3 zur Verfügung. Diese wird mittels eines pulsweitengeregelten Stromversorgers 4, beispielsweise mit einem Frequenzumrichter, in ein neues Drehstromnetz 5 gewandelt. Eine Induktivität 6, welche auch die Streuinduktivität des nachgeschalteten Transformators 10 sein kann, integriert die Stromimpulse des Drehstromnetzes 5 zu einer Sinusform. Der Transformator 10 überträgt die Leistung und ein zweiter Gleichrichter 11 erzeugt aus einer Wechselspannung 9 die Bearbeitungsspannung 13 für ein Bearbeitungswerkzeug 15.

Eine Messeinrichtung 7, welche den Kurzschlussstrom überwacht, stellt bei Überschreitung ein Fehlersignal 12 zur Verfügung. Dieses wirkt direkt auf die Ansteuerung 8 der Schaltelemente 14 des Stromversorgers 4 und sperrt diese. Durch die pulsweitenmodulierte Frequenz sind Abschaltzeiten im µs-Bereich möglich. Somit wird die Gefahr, dass das Bearbeitungswerkzeug 15 beschädigt wird, bedeutend gemindert.

### Bezugszeichen

- 1: erster Gleichrichter
- 2: Versorgungsnetz
- 3: Gleichspannung
- 4: Stromversorger
- 5: Drehstromnetz
- 6: Induktivität
- 7: Messeinrichtung
- 8: Ansteuerung
- 9: Wechselspannung
- 10: Transformator
- 11: zweiter Gleichrichter
- 12: Fehlersignal
- 13: Bearbeitungsspannung
- 14: Schaltelemente
- 15: Bearbeitungswerkzeug

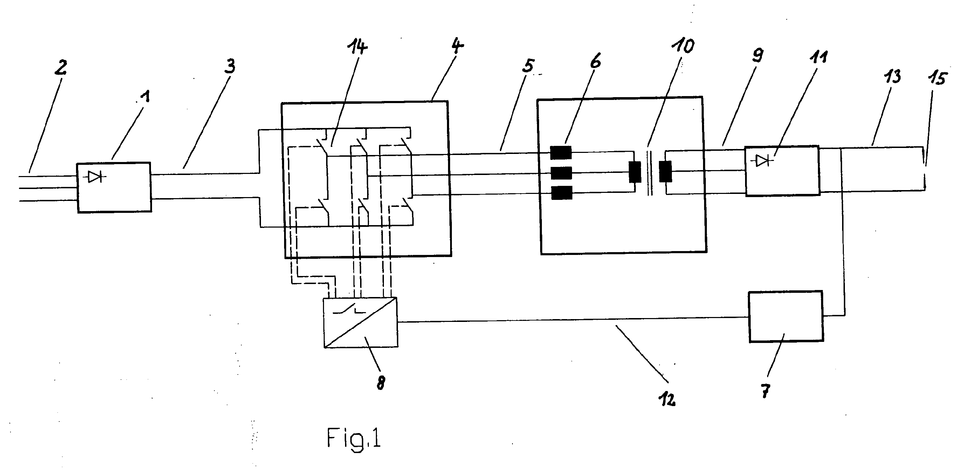

## Patentansprüche

1. Einrichtung zum Abschalten und Betreiben einer Stromzuführung für ein elektrochemisches Bearbeitungswerkzeug bei einem Kurzschluss, wobei ein Gleichrichter aus einem Versorgungsnetz eine Gleichspannung zur Verfügung stellt,
**dadurch gekennzeichnet,**
**dass** die Gleichspannung (3) in einem pulsweitengeregelten Stromversorger (4) in ein Drehstromnetz (5) gewandelt wird, dass nachfolgend die Stromimpulse des Drehstromnetzes (5) in einer Induktivität (6) zu einer Sinusform integriert werden, wobei ein Transformator (10) die Leistung überträgt und dass in einem zweiten Gleichrichter (11) aus der Wechselspannung (9) eine Bearbeitungsspannung (13) für das Betreiben des elektrochemischen Bearbeitungswerkzeuges (15) erzeugt wird, wobei nach dem zweiten Gleichrichter (11) eine Messeinrichtung (7) angeordnet ist, die einen Kurzschlussstrom überwacht und bei Überschreiten des Kurzschlussstromes ein Fehlersignal (12) erzeugt, das direkt auf eine Ansteuerung (8) der Schaltelemente (14) des Stromversorgers (4) gerichtet ist.
